# EUROPEAN PATENT APPLICATION

(11) **EP 4 717 900 A1**
(43) Date of publication of application: **01.04.2026**
(21) Application number: 25205867.2
(22) Date of filing: 30.09.2025
(51) Int. Cl.: F02C 7/32

(54) **GAS TURBINE ENGINE TOWER SHAFT ASSEMBLY**

(30) Priority: 30.09.2024 US 202418902846
(71) Applicant: PRATT & WHITNEY CANADA CORP., Longueuil, Québec J4G 1A1 (CA)
(72) Inventor: POKRZYWA, Lukasz, (01BE5) Longueuil, J4G 1A1 (CA); LABBE, Michel, (01BE5) Longueuil, J4G 1A1 (CA); PIOTROWSKI, Maciej, (01BE5) Longueuil, J4G 1A1 (CA)
(74) Representative: Dehns

(57) **Abstract**

A gas turbine engine (20) is provided that includes a compressor, a turbine, and engine shaft (30), a gearbox (38), and a tower shaft assembly (40). The engine shaft (30) is engaged with the compressor and the turbine. The tower shaft assembly (40) is in drive engagement between the engine shaft (30) and the gearbox (38). The tower shaft assembly (40) includes a tower shaft (32), a first bearing (48), and a first gear (44). The tower shaft (32) extends axially along a rotational axis (54). The first bearing (48) is engaged with the tower shaft (32). The first bearing (48) has a plurality of roller elements (100) and an inner ring (96) engaged with the roller elements (100). The first gear (44) is engaged with the tower shaft (32) and extends axially between first gear first and second axial end surfaces (114, 116). A first interference fit exists between the first gear (44) and the inner ring (96) of the first bearing (48). The first gear (44) is configured for engagement with the gearbox (38).

## Description

### BACKGROUND OF THE INVENTION

### 1. Technical Field

The present disclosure relates to gas turbine engines in general, and to mechanisms for driving a gas turbine engine gearbox in particular.

### 2. Background Information

Gas turbine engines often include an accessory gearbox to drive various components ancillary to the operation of the gas turbine engine and/or the aircraft powered by the gas turbine engine. The gearbox may be driven off of an engine spool via a shaft, sometimes referred to as a "tower shaft". In many gas turbine engine applications, space constraints are considerable. Hence, it is desirable to have a gearbox / tower shaft arrangement that requires less room that conventional arrangements.

### SUMMARY

According to an aspect of the present disclosure, a gas turbine engine is provided that includes a compressor, a turbine, and engine shaft, a gearbox, and a tower shaft assembly. The engine shaft is engaged with the compressor and the turbine. The tower shaft assembly is in drive engagement between the engine shaft and the gearbox. The tower shaft assembly includes a tower shaft, a first bearing, and a first gear. The tower shaft extends axially along a rotational axis between a first end and an opposite second end. The first bearing is engaged with the tower shaft. The first bearing has a plurality of roller elements and an inner ring engaged with the plurality of roller elements. The first gear (FG) is engaged with the tower shaft. The first gear extends axially between a FG first axial end surface and an opposite FG second axial end surface. A first interference fit exists between the first gear and the inner ring of the first bearing. The first gear is configured for engagement with the gearbox.

In any of the aspects or embodiments described above and herein, the first gear may include a first cavity extending axially inwardly from the FG first axial end surface, and a portion of the inner ring of the first bearing may be received within the first cavity such that the first interference fit exists between the first cavity and the portion of the inner ring of the first bearing received within the first cavity.

In any of the aspects or embodiments described above and herein, the inner ring (IR) of the first bearing may extend axially between a IR first axial end surface and an opposite IR second axial end surface, and the portion of the inner ring of the first bearing received within the first cavity may be contiguous with the IR second axial end surface.

In any of the aspects or embodiments described above and herein, the first cavity may include a base surface and a lateral surface, and the lateral surface may extend axially between the FG first axial end surface and the base surface. The first interference fit may exist between the portion of the inner ring of the bearing received within the first cavity and the lateral surface of the first cavity.

In any of the aspects or embodiments described above and herein, there may be a mechanical engagement between the first gear and the tower shaft.

In any of the aspects or embodiments described above and herein, the first gear may include a second cavity that extends axially from the base surface of the first cavity. The second cavity may have a first splined configuration and the tower shaft may have a second splined configuration that mates with the first splined configuration to form the mechanical engagement between the first gear and the tower shaft.

In any of the aspects or embodiments described above and herein, the first gear may include a third cavity that extends axially between the second cavity and the FG second axial end surface, and a second interference fit may exist between the third cavity and the tower shaft.

In any of the aspects or embodiments described above and herein, the tower shaft assembly may include a retainer engaged with the tower shaft adjacent the second end of the tower shaft.

In any of the aspects or embodiments described above and herein, the tower shaft may include a support shoulder, and the first bearing may be disposed between the support shoulder and the first gear, and the first gear may be disposed between the first bearing and the retainer.

In any of the aspects or embodiments described above and herein, the tower shaft assembly may include a biasing structure disposed between the retainer and the first gear.

In any of the aspects or embodiments described above and herein, the inner ring may include an engagement feature disposed in an outer radial surface of the inner ring.

In any of the aspects or embodiments described above and herein, a second interference fit may exist between the first gear and the tower shaft.

In any of the aspects or embodiments described above and herein, a spacer may be disposed between the inner ring of the first bearing and the first gear.

In any of the aspects or embodiments described above and herein, the first gear may be configured as a bevel gear.

In any of the aspects or embodiments described above and herein, the tower shaft assembly may include a second gear engaged with the tower shaft, wherein the second gear is configured as a bevel gear and is disposed at the first end of the tower shaft, and the tower shaft assembly may include a second bearing engaged with the tower shaft and disposed adjacent the second gear, and the first gear may be disposed adjacent the second end of the tower shaft.

In any of the aspects or embodiments described above and herein, the second gear may be integral with the tower shaft.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic sectional view of a gas turbine engine.
FIG. 2 is an enlarged partial view of the gas turbine engine shown in FIG. 1.
FIGS. 3 and 3A are further enlargements of portions of the tower shaft assembly shown in FIGS. 1 and 2.
FIG. 3B is a diagrammatic sectional view of a second bevel gear embodiment.
FIG. 4 is a diagrammatic sectional view of a tower shaft embodiment.
FIG. 5 is a diagrammatic sectioned view of a present disclosure tower shaft embodiment.
FIG. 5A is a diagrammatic sectioned view of a present disclosure tower shaft embodiment.
FIG. 5B is a diagrammatic sectioned view of a present disclosure tower shaft embodiment.
FIG. 6 is a diagrammatic view illustrating a tower shaft support shoulder embodiment disposed within a flow path structure.

### DETAILED DESCRIPTION

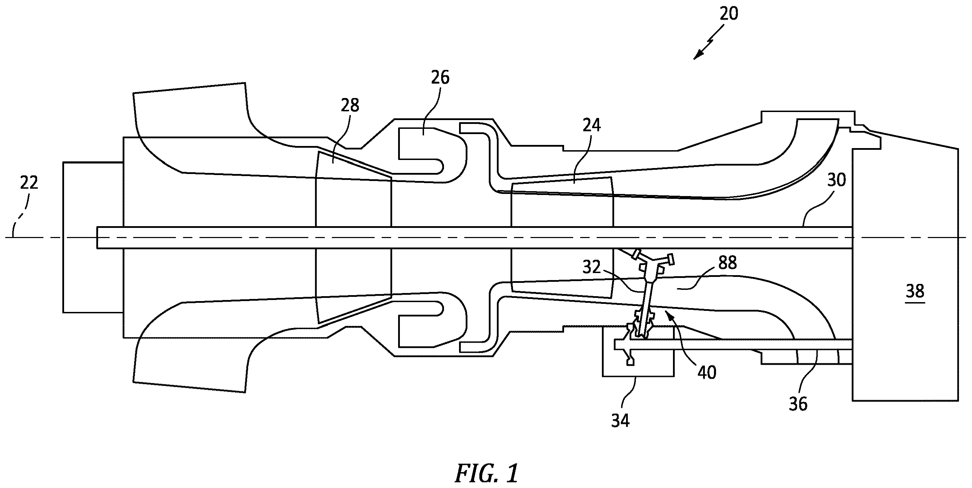

FIG. 1 shows a diagrammatic sectional view of a gas turbine engine 20. The gas turbine engine 20 extends along an axial centerline 22, and includes a compressor section 24, a combustor section 26, and a turbine section 28. The compressor section 24 includes a plurality of compressor stages. The turbine section 28 includes a plurality of turbine stages. In the exemplary engine 20 shown in FIG. 1, the engine sections are disposed along the centerline 22. At least one compressor stage is connected to and driven by a turbine stage through an engine shaft 30. The engine is described herein as having an "engine shaft". Different engine configurations have different shaft configurations; e.g., a high speed shaft and a low speed shaft, and the like. The present disclosure is not limited to any particular engine shaft 30 arrangement.

As will be detailed herein, the gas turbine engine 20 includes a tower shaft 32 engaged with the engine shaft 30 and an angle gearbox 34. A lay shaft 36 is engaged with the angle gearbox 34 and an accessory gearbox 38. During operation of the gas turbine engine 20, the tower shaft 32 is driven by the engine shaft 30, and in turn the tower shaft 32 drives the angle gearbox 34. The lay shaft 36 is driven by the angle gearbox 34, and in turn the lay shaft 36 drives the accessory gearbox 38.

The terms "forward", "leading", "aft, "trailing" are used herein to indicate the relative position of a component or surface within the gas turbine engine 20. In the gas turbine engine 20 embodiment shown in FIG. 1, the compressor section 24 is disposed forward of the turbine section 28 (in terms of core gas flow) and the turbine section 28 is disposed aft of the compressor section 24 (in terms of core gas flow). The terms "inner radial" and "outer radial" refer to relative radial positions from the engine centerline 22. An inner radial component or path is disposed radially closer to the engine centerline 22 than an outer radial component or path.

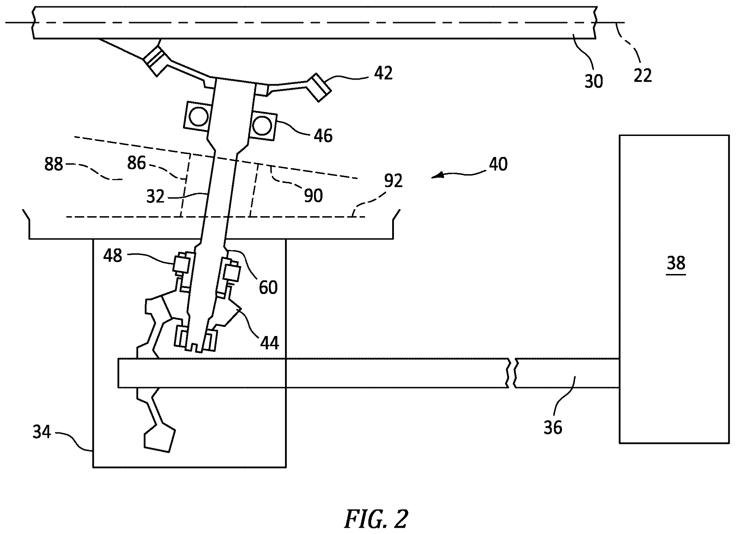

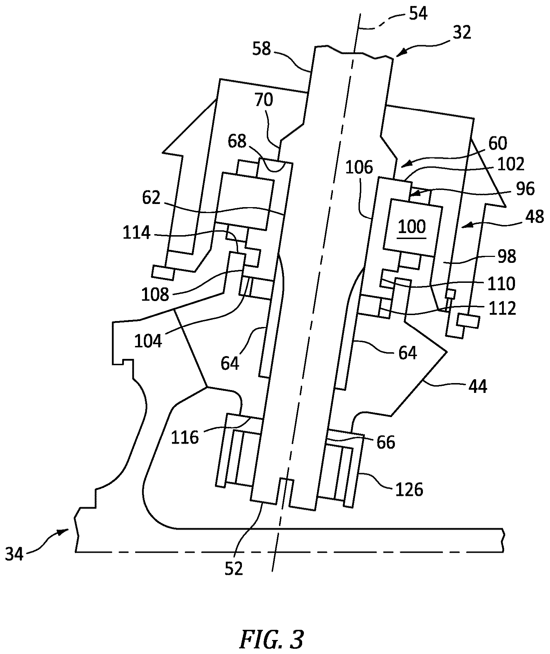

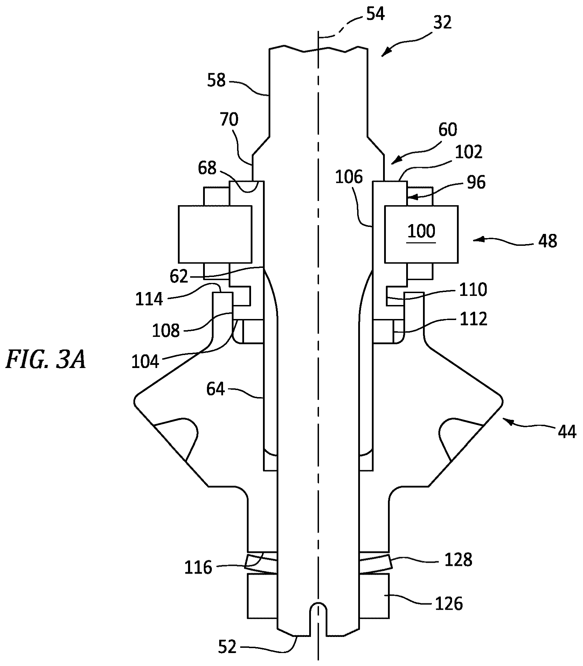

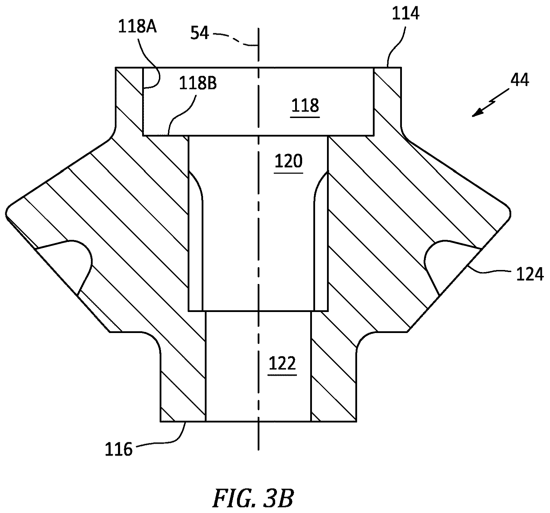

FIG. 2 is a partial view of a portion of the gas turbine engine 20 shown in FIG. 1, enlarged to facilitate viewing of a tower shaft assembly 40 configured to provide drive engagement between an engine shaft 30 and the angle gearbox 34 of the engine 20. As shown in FIG. 2, a lay shaft 36 provides drive engagement between the angle gearbox 34 and an auxiliary gearbox 38. The tower shaft assembly 40 includes a tower shaft 32, a first bevel gear 42, a second bevel gear 44, an inner radial bearing 46, and an outer radial bearing 48. FIG. 3 is a further enlargement of a portion of the tower shaft assembly 40 shown in FIGS. 1 and 2 to facilitate viewing a portion of the tower shaft assembly 40. FIG. 3A is an alternative embodiment of the tower shaft assembly 40 shown in FIGS. 1-3. FIG. 3B is a diagrammatic sectional view of a second bevel gear 44 embodiment.

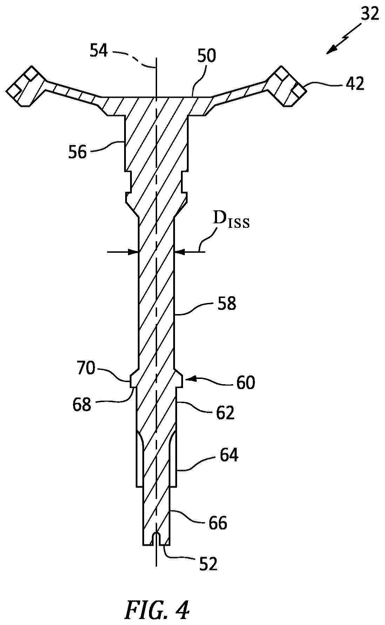

Referring to FIG. 4, the tower shaft 32 extends axially between a first end 50 and a second end 52 along a tower shaft rotational axis 54 (see also FIG. 3). The tower shaft 32 includes an inner radial bearing engagement segment 56, an intermediate shaft segment 58, a support shoulder 60, an outer radial bearing engagement segment 62, a second bevel gear engagement segment 64, and a retainer segment 66. The inner radial bearing engagement segment 56, intermediate shaft segment 58, support shoulder 60, outer radial bearing engagement segment 62, second bevel gear engagement segment 64, and the retainer segment 66 are disposed axially in sequential order from the first end 50 to the second end 52 of the tower shaft 32.

The first bevel gear 42 is attached to the tower shaft 32 adjacent the first end 50 of the tower shaft 32. In the embodiment shown in FIGS. 2 and 4, the first bevel gear 42 is integral with the tower shaft 32. The present disclosure does not require the first bevel gear 42 to be integral with the first end 50 of the tower shaft 32; e.g., the first bevel gear 42 may be an independent structure that is attached to the tower shaft 32. The first bevel gear 42 is configured to engage with a mating bevel gear (see FIG. 2) that is engaged with the engine shaft 30. In the embodiment shown in FIGS. 2 and 4, the inner radial bearing engagement segment 56 is contiguous with the hub of the first bevel gear 42 and is configured for engagement with the inner radial bearing 46.

The intermediate shaft segment 58 extends between the inner radial bearing engagement segment 56 and the support shoulder 60. The intermediate shaft segment 58 may be described as having an intermediate shaft segment diameter (D_{ISS}).

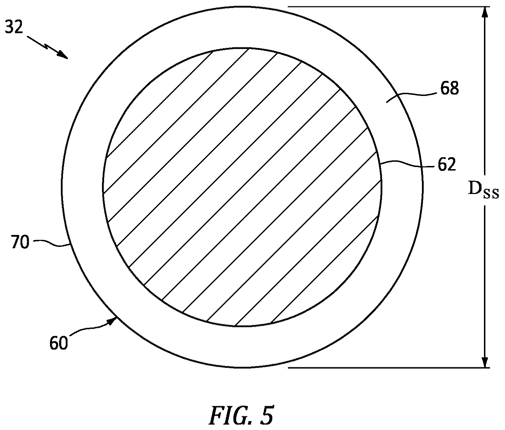

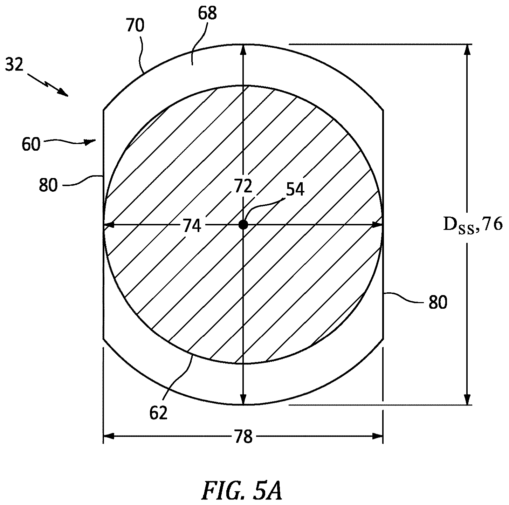

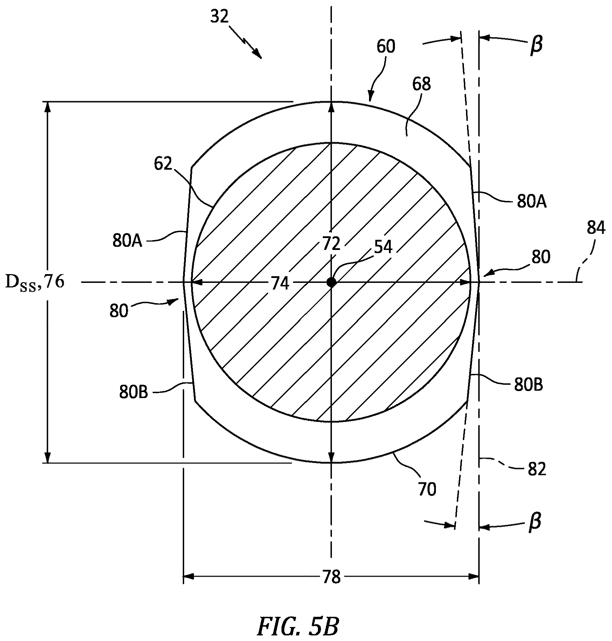

Referring to FIGS. 4 and 5-5B, the support shoulder 60 extends radially outward relative to the intermediate shaft segment 58 and has a bearing support surface 68; e.g., extending outwardly perpendicular to the tower shaft rotational axis 54. The present disclosure is not, however, limited to a perpendicularly oriented bearing support surface 68. The bearing support surface 68 may have any configuration that functions to support the outer radial bearing 48.

In some embodiments, the support shoulder 60 may have a cross-sectional geometry (e.g., in a plane perpendicular to the tower shaft rotational axis 54) that is rotationally symmetric. A non-limiting example of a cross-sectional geometry that is rotationally symmetric is a circular cross-sectional geometry having an support shoulder outer radial surface 70 disposed at a support shoulder outer radial diameter (D_{SS}); e.g., see FIG. 5.

Referring to FIGS. 5A and 5B, in some embodiments, the support shoulder 60 may be configured with a cross-sectional geometry (i.e., in a plane perpendicular to the tower shaft rotational axis) that has a major axis 72 and a minor axis 74. The major axis 72 extends through the rotational axis 54 of the tower shaft 32 a distance ("major axis distance 76") between opposite points on the outer radial surface 70 of the support shoulder 60. The minor axis 74 extends through the rotational axis of the tower shaft 32 a distance ("minor axis distance 78") between opposite points on opposite lateral side surfaces 80 (detailed herein) of the support shoulder 60. The major and minor axes 72, 74 are perpendicular to one another. The major axis distance 76 is greater than the minor axis distance 78. In these embodiments, the support shoulder 60 may be described as having a non-circular configuration; e.g., a rotationally non-symmetric configuration.

FIG. 5A illustrates an example embodiment wherein the support shoulder 60 includes outer radial surface portions disposed at the support shoulder outer radial diameter (D_{SS}) and lateral side surfaces 80 (e.g., "flats") on opposing lateral sides. The minor axis 74 extends between the lateral side surfaces 80; i.e., between the flats. In this embodiment, the minor axis distance 78 is less than the major axis distance 76. In this example, the major axis distance 76 equals the support shoulder outer radial diameter (Dss) and the lateral side surfaces 80 are parallel one another. In alternative embodiments, the lateral side surfaces 80 may be non-parallel one another.

FIG. 5B illustrates another example of a support shoulder 60 embodiment having a minor axis 74 and a major axis 72 configuration and lateral side surfaces 80 disposed on opposite lateral sides. Each lateral side surface 80 includes a first lateral side surface segment 80A and a second lateral side surface segment 80B. On each lateral side, the first lateral side surface segment 80A and the second lateral side surface segment 80B are non-parallel one another; i.e., the first lateral side surface segment 80A and the second lateral side surface segment 80B are skewed relative to one another. For example, each lateral side surface segment 80A, 80B may be disposed at an angle beta ("β") relative to a vertical line 82 that is perpendicular to a horizontal line 84 passing through the tower shaft rotational axis 54. In those embodiments wherein the horizontal line 84 coincides with the minor axis 74 and the vertical line 82 coincides with the major axis 72 (i.e., as shown in FIG. 5B), the angle beta ("β") may be described as being relative to the major axis 72. In this embodiment, the minor axis distance 78 between the lateral side surfaces 80 is less than the major axis distance 76; i.e., the support shoulder outer radial diameter (Dss). In the example shown in FIG. 5B, all the lateral side surface segments 80A, 80B are disposed at the same angle beta ("β"). In alternative embodiments, all the lateral side surface segments 80A, 80B may not be disposed at the same angle.

The support shoulder 60 embodiment examples shown in FIGS. 5A and 5B are examples of non-circular support shoulder 60 cross-sectional geometries. In those embodiments that include a support shoulder 60 having a non-circular cross-sectional geometry, the present disclosure is not limited to any particular non-circular support shoulder 60 cross-sectional geometry. For example, in alternative embodiments each lateral side surface 80 may be arcuately shaped, or each may have more than two surface segments, or the like. Preferably, the lateral side surface(s) 80 on the respective lateral sides mirror one another.

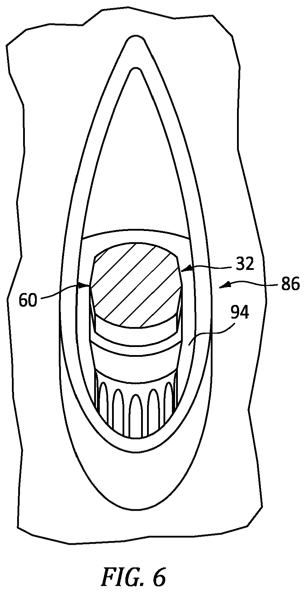

The support shoulder 60 cross-sectional geometries that include a minor axis 74 and a major axis 72 provide considerable utility in some applications. In some applications, the tower shaft 32 may extend through a flow path structure 86 (e.g., a strut) that is disposed within the core gas flow path 88 of the engine 20. FIG. 2 illustrates the tower shaft 32 extending through a flow path structure 86; e.g., a strut shown in dashed line to not obscure the tower shaft 32, extending between an inner radial flow path boundary 90 and an outer radial flow path boundary 92. The flow path structure 86 includes an interior cavity 94; e.g., see FIG. 6. Flow path structures 86 very often have an aerodynamic shape (e.g., an airfoil shape) to minimize flow disruption within the flow path; e.g., a width that is substantially less than a chord and the interior cavity 94 may reflect the aerodynamic shape as is shown in FIG. 6. The width of the flow path structure (and its interior cavity 94), therefore, may place limitations on a tower shaft 32 extending through the flow path structure 86 (e.g., the strut). The support shoulder 60 cross-sectional geometries having a minor axis 74 and a major axis 72 (e.g., as shown in FIGS. 5A and 5B) can be oriented to pass through the flow path structure 86 (e.g., minor axis 74 aligned with the flow path structure width) during assembly and yet still have a larger diameter available for a support shoulder 60.

Referring back to FIG. 3, the outer radial bearing 48 is shown contiguous with the bearing support surface 68 of the support shoulder 60, engaged with the outer radial bearing engagement segment 62. The outer radial bearing 48 includes an inner ring 96, and outer ring 98, and a plurality of roller elements 100 disposed between and engaged with the inner and outer rings 96, 98. The inner ring 96 extends axially between a first axial end surface 102 and a second axial end surface 104, and includes an inner bore 106. The tower shaft outer radial bearing engagement segment 62 is received within the inner bore 106. In some embodiments, the inner bore 106 of the inner ring 96 and the outer diameter of the outer radial bearing engagement segment 62 may be configured such that an interference fit is formed therebetween. In the embodiment shown in FIG. 3, the first axial end surface 102 of the inner ring 96 is shown in contact with the bearing support surface 68 of the support shoulder 60. In alternative embodiments, a spacer or the like (not shown) may be disposed between the first axial end surface 102 of the inner ring 96 and the bearing support surface 68 of the support shoulder 60. The inner ring 96 includes an outer diameter surface 108 that extends axially between the roller elements 100 and the second axial end surface 104. In the embodiment shown in FIG. 3, the outer diameter surface 108 of the inner ring 96 includes an engagement feature 110 (shown as a channel disposed in the outer diameter surface 108) to facilitate engagement / disengagement (e.g., assembly / disassembly) of the outer radial bearing 48 from the tower shaft 32. The present disclosure does not require an engagement feature 110 disposed in the outer diameter surface 108 of the inner ring 96.

In the embodiment shown in FIGS. 3 and 3A, the tower shaft assembly 40 includes at least one spacer 112 disposed between the second axial end surface 104 of the outer radial bearing inner ring 96 and the second bevel gear 44. The spacer(s) 112 may be configured to facilitate axial positioning of the second bevel gear 44; e.g., for second bevel gear 44 alignment purposes. The present disclosure does not require a spacer 112 disposed between the second axial end surface 104 of the outer radial bearing inner ring 96 and the second bevel gear 44.

Referring to FIGS. 3-3B, the second bevel gear 44 includes a first axial end surface 114, a second axial end surface 116, a first cavity 118, a second cavity 120, a third cavity 122, and a plurality of teeth 124. The first axial end surface 114 is disposed at a first axial end of the second bevel gear 44 and the second axial end surface 116 is disposed at a second axial end, opposite the first axial end. The first, second, and third cavities 118, 120, 122 are concentric with a rotational axis of the second bevel gear 44, which aligns with the rotational axis 54 of the tower shaft 32 when the mounted on the tower shaft 32. The first cavity 118 has a lateral surface 118A disposed at an inner diameter and a base surface 118B. The lateral surface 118A extends axially a distance between the base surface 118B and the first axial end surface 114. The first cavity 118 is configured to receive a portion of the inner ring 96 of the outer radial bearing 48 (and the spacer 112 when included). The lateral surface 118A of the first cavity 118 and the outer diameter surface of the inner ring 96 (i.e., the inner ring portion disposed axially between the roller elements 100 and the second axial end surface 104) may be configured such that an interference fit is formed therebetween.

The second cavity 120 extends axially a distance from the base surface 118B of the first cavity 118 in a direction toward the second axial end 116. The second cavity 120 is configured to mechanically engage with the second bevel gear engagement segment 64 of the tower shaft 32. In the exemplary embodiment shown in FIGS. 3 and 3A, the second cavity 120 has a splined configuration that engages with a mating splined configuration disposed in the second bevel gear engagement segment 64 of the tower shaft 32. The present disclosure is not limited to a splined engagement between the second cavity 120 and the second bevel gear engagement segment 64 of the tower shaft 32.

The third cavity 122 extends axially between the second cavity 120 and the second axial end surface 116. The third cavity 122 is configured to receive a portion of the tower shaft 32. In some embodiments, the third cavity 122 and the tower shaft 32 are configured such that an interference fit is formed therebetween. The present disclosure does not require the second bevel gear 44 to include the third cavity 122.

Referring to FIG. 3, the retainer segment 66 of the tower shaft 32 is configured to engage with a retainer 126; e.g., a nut or the like. In some embodiments, a biasing structure 128 (see FIG. 3A) such as a Belleville washer or the like may be included. The retainer 126 may be used to positionally retain the outer radial bearing 48 and the second bevel gear 44.

The portion of the tower shaft assembly 40 that includes the support shoulder 60, the outer radial bearing 48, and the second bevel gear 44 provides a desirable compact solution that can be used in many space constrained applications.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A gas turbine engine (20), comprising:
a compressor;
a turbine;
an engine shaft (30) engaged with the compressor and the turbine;
a gearbox (38);
a tower shaft assembly (40) in drive engagement between the engine shaft (30) and the gearbox (38), the tower shaft assembly (40) including:
a tower shaft (32) extending axially along a rotational axis (54) between a first end (50) and an opposite second end (52);
a first bearing (48) engaged with the tower shaft (32), the first bearing (48) having a plurality of roller elements (100) and an inner ring (96) engaged with the plurality of roller elements (100); and
a first gear (44) engaged with the tower shaft (32), the first gear (44) extending axially between a first gear first axial end surface (114) and an opposite first gear second axial end surface (116);
wherein a first interference fit exists between the first gear (44) and the inner ring (96) of the first bearing (48); and
wherein the first gear (44) is configured for engagement with the gearbox (38).

2. The gas turbine engine (20) of claim 1, wherein the first gear (44) includes a first cavity (118) extending axially inwardly from the first gear first axial end surface (114); and
wherein a portion of the inner ring (96) of the first bearing (48) is received within the first cavity (118) such that the first interference fit exists between the first cavity (118) and the portion of the inner ring (96) of the first bearing (48) received within the first cavity (118).

3. The gas turbine engine (20) of claim 2, wherein the inner ring (96) of the first bearing (48) extends axially between an inner ring first axial end surface (102) and an opposite inner ring second axial end surface (104); and
wherein the portion of the inner ring (96) of the first bearing (48) received within the first cavity (118) is contiguous with the inner ring second axial end surface (104).

4. The gas turbine engine (20) of claim 2 or 3, wherein the first cavity (118) includes a base surface (118B) and a lateral surface (118A), the lateral surface (118A) extending axially between the first gear first axial end surface (114) and the base surface (118B);
wherein the first interference fit exists between the portion of the inner ring (96) of the bearing received within the first cavity (118) and the lateral surface (118A) of the first cavity (118).

5. The gas turbine engine (20) of claim 4, wherein there is a mechanical engagement between the first gear (44) and the tower shaft (32).

6. The gas turbine engine (20) of claim 5, wherein the first gear (44) further includes a second cavity (120) that extends axially from the base surface (118B) of the first cavity (118).

7. The gas turbine engine (20) of claim 6, wherein the second cavity (120) has a first splined configuration and the tower shaft (32) has a second splined configuration that mates with the first splined configuration to form the mechanical engagement between the first gear (44) and the tower shaft (32).

8. The gas turbine engine (20) of claim 7, wherein the first gear (44) further includes a third cavity (122) that extends axially between the second cavity (120) and the first gear second axial end surface (116), and wherein a second interference fit exists between the third cavity (122) and the tower shaft (32).

9. The gas turbine engine (20) of any preceding claim, wherein the tower shaft assembly (40) further includes a retainer (126) engaged with the tower shaft (32) adjacent the second end (52) of the tower shaft (32).

10. The gas turbine engine (20) of claim 9, wherein the tower shaft (32) includes a support shoulder (60), and the first bearing (48) is disposed between the support shoulder (60) and the first gear (44), and the first gear (44) is disposed between the first bearing (48) and the retainer (126).

11. The gas turbine engine (20) of claim 10, wherein:
the tower shaft assembly (40) further includes a biasing structure (128) disposed between the retainer (126) and the first gear (44); and/or
the inner ring (96) includes an engagement feature (110) disposed in an outer radial surface (70) of the inner ring (96).

12. The gas turbine engine (20) of any preceding claim, wherein a second interference fit exists between the first gear (44) and the tower shaft (32).

13. The gas turbine engine (20) of any preceding claim, further comprising a spacer (112) disposed between the inner ring (96) of the first bearing (48) and the first gear (44), wherein, optionally:
the first gear (44) includes a first cavity (118) extending axially inwardly from the first gear first axial end surface (102; 114), and the first cavity (118) includes a base surface (118B) and a lateral surface (118A), the lateral surface (118A) extending axially between the first gear first axial end surface (114) and the base surface (118B); and
the inner ring (96) of the first bearing (48) extends axially between an inner ring first axial end surface (102) and an opposite inner ring second axial end surface (104); and
the spacer (112) is disposed between the base surface (118B) of the first cavity (118) and the inner ring second axial end surface (104) of the inner ring (96).

14. The gas turbine engine (20) of any preceding claim, wherein:
the first gear (44) and the tower shaft (32) are mechanically engaged with one another, wherein, optionally, the first gear (44) and the tower shaft (32) are mechanically engaged with one another by mating splines; and/or
the first gear (44) is configured as a bevel gear.

15. The gas turbine engine (20) of any preceding claim, wherein the tower shaft assembly (40) further comprises:
a second gear (42) engaged with the tower shaft (32), wherein the second gear (42) is configured as a bevel gear and is disposed at the first end (50) of the tower shaft (32); and
a second bearing (46) engaged with the tower shaft (32) and disposed adjacent the second gear (42); and
wherein the first gear (44) is disposed adjacent the second end (52) of the tower shaft (32),
wherein, optionally, the second gear (42) is integral with the tower shaft (32).
